# EUROPÄISCHE PATENTANMELDUNG

(11) **EP 0 554 526 A2**
(43) Veröffentlichungstag der Anmeldung: **11.08.1993**
(21) Anmeldenummer: 92119159.9
(22) Anmeldetag: 09.11.1992
(51) Int. Cl.: C08G 18/42, C08G 18/61, C08G 18/66, C08J 5/22

(54) **Thermoplastisch verarbeitbare Polyurethanformmasse zur Herstellung von genarbten Sinterfolien**

(30) Priorität: 06.02.1992 DE 4203307
(71) Anmelder: Firma Carl Freudenberg, D-69469 Weinheim (DE)
(72) Erfinder: Mühlfeld, Horst, W-6149 Grasellenbach 3 (DE); Müller-Broll, Gerhard, Dr., W-6149 Fürth (DE); Dabisch, Thomas, Dr., W-6942 Mörlenbach 4 (DE)

(57) **Zusammenfassung**

Es wird ein thermoplastisches Sinterpulver zur Herstellung genarbter Sinterfolien beschrieben, wobei das Pulver aus ausschließlich linearen, aliphatischen Komponenten besteht. Die Polyolkomponente setzt sich zusammen aus 60 bis 80 Gewichtsteilen Polycarbonatdiol mit einem MG von 2000 und einer OH-Zahl von 56 auf Basis Adipinsäure, Hexandiol und Neopentylglykol mit einem MG 2000 und einer OH-Zahl von 56, zusammen 100 Gewichtsteile Gesamtpolyol. Ferner ist 1,6-Hexamethylendiisocyanat in einem Äquivalenzverhältnis von 2,8:1,0 bis 4,2:1,0, bezogen auf das Gesamtpolyol, enthalten. 1,4-Butandiol dient als Kettenverlängerer.

Die Kennzahl, gebildet aus dem mit 100 multiplizierten Quotienten der Äquivalenzverhältnisse von Isocyanatgruppen und der Summe der Hydroxylgruppen von Polyolen und Kettenverlängerer beträgt 97 bis 99.

## Beschreibung

Die Erfindung befaßt sich mit einer thermoplastisch verarbeitbaren Polyurethanformmasse, welche die Herstellung von Sinterfolien, insbesondere genarbten Sinterfolien, ermöglicht. Solche Folien dienen der Oberflächenverkleidung der Armaturentafeln in Kraftfahrzeugen.

Solche Folien dienen der Oberflächenverkleidung der Armaturentafeln in Kraftfahrzeugen und wurden bisher aus Polyvinylchlorid hergestellt, dessen Chlorgehalt und Schwermetallanteile sowie dessen Weichmachergehalte Probleme beim Recycling und beim Einsatz im Kraftfahrzeug aufwerfen. Bekannt ist das sogenannte fogging, d. h. das Ausgasen von Weichmachern bei Sonnenbestrahlung, was sich in einem lästigen Film auf der Innenseite von Frontscheiben bemerkbar macht.

Die kommerziell erhältlichen, thermoplastischen Polyurethane, die für die Kunstlederfertigung und auch im Extrusions- und Spritzgießverfahren Anwendung finden, sind zwar für eine thermoplastische Verarbeitung nach dem Sinter-Pulver-Verfahren geeignet, aber insbesondere die Licht- und Temperaturstabilität der erhaltenen Folien entsprechen nicht den Anforderungen, die die Automobilindustrie an Folien für Armaturentafeln stellt:

Aromatische thermoplastische Polyurethane sind aufgrund ihres Aufbaus aus aromatischen Diisocyanaten nicht lichtstabil. Bei hellen Farbeinstellungen entsteht durch Lichteinwirkung eine starke Vergilbung, und selbst bei schwarzen Folien kommt es zu einer Farb- und Glanzgradveränderung.

Aliphatische thermoplastische Polyurethane sind zwar lichtecht, aber ihre Temperaturstabilität ist für den Einsatz auf Armaturentafeln in Kraftfahrzeugen nicht ausreichend. Aufgrund starker Sonneneinstrahlung erhitzt sich nämlich der Innenraum von Kraftfahrzeugen hinter der Glasscheibe auf der Armaturentafel bis über 100°C, eine Temperatur, die bereits im Erweichungsbereich dieser Polyurethane liegt. Eine Narbenstabilität bis zu einer Temperatur von 130°C und die Heißlichtstabilität bis 120°C sind somit nicht mehr gegeben.

Aufgabe der vorliegenden Erfindung war es daher, eine als Sinterpulver thermoplastisch verarbeitbare Polyurethanformmasse zu finden, die folgende Eigenschaften aufweist:
Weicher und lederartiger Griff;
Lichtechtheit, d.h. keine Vergilbung bei Lichteinwirkung und keine Veränderung des Glanzgrades; Narbenstabilität bei Temperaturen bis 130°C und Heißlichtstabilität bis 120°C;
Erweichungsbereich über 140°C;
scharfer Schmelzpunkt;
bereits ab dem Schmelzpunkt niedrigviskose Schmelze;
hohe Zugfestigkeit, Einreiß- und Weiterreißfestigkeit;
geringes "fogging", d. h. Ausgasen von Weichmachern;
gute Haftung mit dem Polyurethan-Hintergrundschaum der Instrumententafel-Körper;
leichte Entformbarkeit der Sinterhaut aus dem Werkzeug ohne Einsatz eines Trennmittels.

Diese Vielfalt der Aufgabenstellung, welche sowohl aus den Anforderungen bei der Herstellung von Armaturenbrettern als auch aus den Betriebsbedingungen im Kraftfahrzeug resultiert, wird vollständig gelöst durch eine thermoplastisch in Form von Sinterpulver verarbeitbare Polyurethanformmasse, welche zur Herstellung von genarbten Sinterfolien als Bespannung für Armaturentafeln geeignet ist, wobei die Formmasse den im Patentanspruch 1 gekennzeichneten Aufbau besitzt. Eine vorteilhafte Variante ist im Unteranspruch 2 aufgezeigt.

Die Formmasse enthält ausschließlich lineare aliphatische Komponenten; in Pulverform kann sie nach dem bekannten "Powder-Slush-Verfahren" in offenen beheizbaren Werkzeugen zu Häuten gesintert werden. Nach dem Abkühlen des Werkzeuges kann die Slush-Haut entnommen werden. Das Verfahren ist also analog demjenigen zur Herstellung von Armaturentafeln-Bespannungen aus PVC-Häuten. Beschrieben ist es beispielsweise in DE-A 39 32 923 als "Powder-Slush-Verfahren":
Das Pulver wird einfach aus dem Granulat über Kaltmahlen gewonnen. Das Mahlgut wird in das an einer Seite offene, beheizbare Werkzeug eingebracht, auf der Innenwandung der beheizten Oberfläche innerhalb kurzer Zeit gesintert und anschließend nach dem Abkühlen des Werkzeugs als Haut entformt.

Die erfindungsgemäße Kombination von Polyolen im "Weichsegment" beeinflußt die Schmelzviskosität und den Schmelzeverlauf beim Sinterprozeß so günstig, daß ein schnelles Sintern zu einer homogenen, pinholes- und blasenfreien Folie möglich ist.

Der Aufbau des "Hartsegments" aus 1,6-Hexamethylendiisocyanat und 1,4-Butandiol sowie die erfindungsgemäße Kombination der Polyole im "Weichsegment" führen zu einem schnell kristallisierenden Produkt. Diese Kristallisationsfreudigkeit ist für die gute Verarbeitbarkeit im Powder-Slush-Verfahren und für das hervorragende Temperaturverhalten bei der Anwendung mit ausschlaggebend.

Alle diese Faktoren machen das Sinterverfahren mit der erfindungsgemäßen Formmasse besonders wirtschaftlich.

Es hat sich gezeigt, daß nur die folgende Zusammensetzung der das Sinterpulver bildenden Polyurethanformmasse alle in der Aufgabenstellung genannten Forderungen erfüllt:
Es müssen ausschließlich lineare aliphatische Komponenten eingesetzt werden, nämlich ein Polyolgemisch aus 60 bis 80 Gew.-% Polycarbonatdiol mit einer OH-Zahl von 56 und mit einem MG von 2000; 20 bis 40 Gew.-% Adipinsäure-Hexandiol-Neopentylglykol-Polyester mit einer OH-Zahl von 56 und mit einem MG von 2000.

Die Polyurethanformmasse enthält erfindungsgemäß weiterhin 1,6-Hexamethylendiisocyanat. Als Kettenverlängerer dient 1,4-Butandiol. Die Polyole, mit Ausnahme des 1,4-Butandiols, und das 1,6-Hexamethylendiisocyanat liegen in dem Reaktionsgemisch in einem Äquivalenzverhältnis zueinander von 1:2,8 bis 1:4,2 vor. Das Butandiol ist in einem Äquivalenzverhältnis von 1,8:1 bis 3,3:1 vorgegeben, bezogen auf das Gesamtpolyol.

Die Kennzahl, gebildet aus dem mit 100 multiplizierten Quotienten der Äquivalenzverhältnisse von Isocyanatgruppen und der Summe der Hydroxylgruppen von Polyolen und Kettenverlängerer, liegt bei 97 bis 99.

Die aus dieser Masse hergestellte Sinterfolie besitzt eine hohe Zugfestigkeit sowie eine hervorragende Einreiß- und Weiterreißfestigkeit. Sie hat einen weichen und lederartigen Griff und neigt auch bei hellen Einfärbungen bei Lichteinwirkung weder zur Vergilbung noch zu einer Veränderung des Glanzgrades.

Das Narbenbild verändert sich bei der Heißlichtalterung (110 - 120°C) nicht; bei der Wärmealterung durch Lagerung auf einem Gitterrost bei 130°C tritt ebenfalls keine Veränderung auf.

Die Folie haftet hervorragend auf dem Polyurethan-Hinterschaum der Instrumententafel.

Wegen des scharfen Schmelzpunktes bei 180°C und des Vorliegens einer bereits ab dem Schmelzpunkt niedrigviskosen Schmelze sintert das Pulver auf der Innenwandung des beheizten Werkzeuges bereits innerhalb kurzer Zeit zu einer homogenen, pinholes- und blasenfreien Folie, die aufgrund der hohen Kristallisationsfreudigkeit der erfindungsgemäßen Formmasse schon nach dem Abkühlen auf nur 100°C ohne Verzug entformt werden kann.

Als besonders vorteilhaft hat sich erwiesen, dem Polyolgemisch zusätzlich 0,5 bis 5 Gewichtsteile, bezogen auf 100 Teile Gesamtpolyol, Dimethylsiloxan mit endständigen OH-Gruppen und einem MG von 2200 zuzusetzen. Das Besondere an dieser Formulierung ist, daß durch den Einbau von Dimethylpolysiloxan im "Weichsegment" der Formulierung eine Entformung der Sinterhaut aus dem Werkzeug ohne Einsatz eines Trennmittels möglich ist. Polysiloxan dient nämlich im Sinter-Polyurethan nicht nur als inneres Gleit- und Fließmittel, sondern zeigt auch bei einem vollständigen Einbau in die Molekülkette die gleiche Wirkung wie ein inneres Trennmittel.

Ein weiterer Vorteil, der nicht zu erwarten war, liegt darin, daß der Gehalt von Dimethylsiloxan mit endständigen OH-Gruppen einen nicht zu "trockenen", lederartigen Griff auf der Hautoberfläche erzielt. Diese Eigenschaft, die meßtechnisch nicht zu erfassen ist, jedoch als Qualitätsmerkmal eine hohe Bedeutung genießt, ist für ein definiert kristallisierendes und kunststoffartiges Polyurethan nicht charakteristisch.

Die erfindungsgemäßen Polyurethanformmassen enthalten keinerlei Weichmacher. Sie können an sich bekannte Zusätze, wie Licht- oder Alterungsschutzmittel, enthalten, ohne ihre vorteilhaften Eigenschaften zu verlieren. Die Zudosierung erfolgt nach bekannten Maßgaben und ist nicht Gegenstand der vorliegenden Erfindung.

Die nachfolgenden Beispiele dienen zur Erläuterung der Erfindung.

### Beispiel 1

### Zusammensetzung der Mischung:

70,00 Gewichtsteile Polycarbonatdiol mit einem MG von 2000
30,00 Gewichtsteile Polyesterdiol auf Basis Adipinsäure, Hexandiol und Neopentylgykol, MG 2000
30,00 Gewichtsteile 1,6-Hexamethylendiisocyanat
11,88 Gewichtsteile 1,4-Butandiol

### Herstellungsverfahren:

Die Herstellung erfolgt im Einstufenverfahren. Die Polyole, 1,4-Butandiol und Diisocyanat werden unter Rühren in einem Reaktionskessel auf 80°C erwärmt. Durch exotherme Reaktion steigt dann die Temperatur in etwa 10 Minuten auf 190°C an. Bei dieser Temperatur wird das Produkt auf eine Polytetrafluorethylen-Folie gegossen. Nach etwa 8 Stunden kann die Platte granuliert und anschließend unter Kühlung mit flüssigem Stickstoff zu feinem Pulver mit einer Kornverteilung von 50 bis 400 µm gemahlen werden.

Die Polyurethanformmasse weist folgende Schmelzeigenschaften auf:
Schmelzpunkt: 180°C
Schmelzindex nach DIN 53 735 bei 2,16 kg Belastung,
gemessen bei 200°C: 53 g/10 min
gemessen bei 210°C: 82 g/10 min
gemessen bei 220°C: 123 g/10 min
gemessen bei 230°C: 215 g/10 min
Eine im Powder-Slush-Verfahren hergestellte Folie hat folgende Eigenschaften:
Zugfestigkeit : 26 N/mm²
Bruchdehnung : 480 %
Weiterreißfestigkeit : 102 N/mm
Foggingverhalten, geprüft nach DIN 75 201,
Reflektometerwert nach 3 h/100°C: 95 % Restglanz kondensierbare Bestandteile
nach 16 h/100°C : 0,50 mg/50 cm²
Lichtechtheit im Xenonbogen (DIN 75 202) : Stufe 8 nach dem Blaumaßstab
Temperaturstabilität, Warmlagerung,
500 h/130°C auf einem Gitterrost: Keine Veränderung des Narbenbildes

### Beispiel 2

### Zusammensetzung der Mischung:

70,00 Gewichtsteile Polycarbonatdiol, MG 2000
27,00 Gewichtsteile Polyesterdiol auf Basis Adipinsäure, Hexandiol und Neopentylglykol, MG 2000
3,00 Gewichtsteile Dimethylsiloxan, MG 2200
30,00 Gewichtsteile 1,6-Hexamethylendiisocyanat
11,91 Gewichtsteile 1,4-Butandiol
Die Herstellung erfolgt gemäß Beispiel 1. Die Polyurethanformmasse weist folgende Schmelzeigenschaften auf:
Schmelzpunkt: 175°C
Schmelzindex nach DIN 53 735 bei 2,16 kg Belastung, gemessen
bei 200°C : 73 g/10 min
bei 210°C : 91 g/10 min
bei 220°C : 158 g/10 min
bei 230°C : 237 g/10 min
Eine im Powder-Slush-Verfahren hergestellte Folie hat folgende Eigenschaften:
Zugfestigkeit : 20 N/mm²
Bruchdehnung : 465 %
Weiterreißfestigkeit : 76 N/mm
Foggingverhalten nach DIN 75 201,
Reflektometerwert nach 3 h/100°C : 96 % Restglanz 10
Kondensierbarer Bestandteil nach
16 h/100°C : 0,61 mg/50 cm²
Lichtechtheit nach DIN 75 202 : Stufe 8 nach dem Blaumaßstab
Temperaturstabilität, Warmlagerung
500 h/130°C auf dem Gitterrost : keine Veränderung des Narbenbildes.

## Patentansprüche

1. Thermoplastisch in Form von Sinterpulver verarbeitbare Polyurethanformmasse zur Herstellung von genarbten Sinterfolien, gekennzeichnet durch den Aufbau aus ausschließlich linearen, aliphatischen Komponenten, nämlich 100 Gewichtsteile Polyolgemisch aus
- 60 bis 80 Gewichtsteilen Polycarbonatdiol, MG 2000, OH-Zahl 56;
- 20 bis 40 Gewichtsteilen Polyesterdiol auf Basis Adipinsäure, Hexandiol und Neopentylglykol, MG 2000,
OH-Zahl 56;
aus 1,6-Hexamethylendiisocyanat in einem Äquivalenzverhältnis von 2,8:1,0 bis 4,2:1,0 zum Gesamtpolyol;
aus 1,4-Butandiol als Kettenverlängerer in einem Äquivalenzverhältnis von 1,8:1,0 bis 3,3:1,0, bezogen auf das Gesamtpolyol;
wobei die Kennzahl, gebildet aus dem mit 100 multiplizierten Quotienten der Äquivalenzverhältnisse von Isocyanatgruppen und der Summe der Hydroxylgruppen von Polyolen und Kettenverlängerer, 97 bis 99 beträgt.

2. Polyurethanformmasse nach Anspruch 1, dadurch gekennzeichnet, daß das Polyolgemisch zusätzlich 0,5 bis 5 Gewichtsteile, bezogen auf 100 Teile Gesamtpolyol, Dimethylsiloxan mit endständigen OH-Gruppen und einem MG von 2200 enthält.
